# EUROPÄISCHE PATENTSCHRIFT

(11) **EP 0 728 235 B1**
(45) Veröffentlichungstag und Bekanntmachung des Hinweises auf die Patenterteilung: **28.05.1997**
(21) Anmeldenummer: 95900702.2
(22) Anmeldetag: 10.11.1994
(51) Int. Cl.: D06N 3/04, A43B 23/16, D06M 17/06

(54) **VERWENDUNG VON WÄSSRIGEN DISPERSIONEN ZWEIPHASIGER EMULSIONS-PFROPFCOPOLYMERISATE ALS BINDEMITTEL FÜR VERSTEIFUNGSMATERIALIEN IN DER TEXTIL- UND LEDERINDUSTRIE**
USE OF AQUEOUS DISPERSIONS OF TWO-PHASE EMULSION-GRAFT COPOLYMERS AS BINDERS FOR STIFFENING MATERIALS IN THE TEXTILE AND LEATHER INDUSTRIES
UTILISATION DE DISPERSIONS AQUEUSES DE COPOLYMERES A DEUX PHASES GREFFES EN EMULSION COMME LIANTS POUR MATERIAUX RIGIDIFIANTS DANS LES INDUSTRIES TEXTILE ET DU CUIR

(30) Priorität: 10.11.1993 DE 4338374
(43) Veröffentlichungstag der Anmeldung: 28.08.1996
(73) Patentinhaber: Wacker-Chemie GmbH, 81737 München (DE)
(72) Erfinder: KOHLHAMMER, Klaus, D-84533 Marktl (DE); KOEGLER, Gerhard, D-84508 Hirten (DE); SCHWEMMER, Monika, D-84579 Unterneukirchen (DE)
(74) Vertreter: Schuderer, Michael
(86) Internationale Anmeldenummer: EP9403721
(87) Internationale Veröffentlichungsnummer: WO9513418

(56) Entgegenhaltungen:
- EP-A- 0 009 258
- EP-A- 0 358 007
- EP-A- 0 600 478
- DE-A- 1 485 579
- FR-A- 2 355 038
- DATABASE WPI Week 9249, Derwent Publications Ltd., London, GB; AN 92-403216 (49) & JP,A,4 300 365 (KANEBO NSC KK) 23. Oktober 1992
- DATABASE WPI Week 7948, Derwent Publications Ltd., London, GB; AN 79-86995B (48) & JP,A,54 137 031 (MITSUI TOATSU CHEM INC) 24. Oktober 1979

## Beschreibung

Die Erfindung betrifft die Verwendung von wäßrigen Dispersionen zweiphasiger, siegelbarer Emulsions-Pfropfcopolymerisate als Wärme- und Lösungsmittel-aktivierbare Bindemittel für Versteifungsmaterialien in der Textil- und Lederindustrie, insbesondere die Verwendung als Bindemittel in Schuhkappen.

In der Textil- und Lederindustrie werden zur Stabilisierung der entsprechenden Endprodukte sehr häufig Versteifungsunterlagen eingearbeitet. Sie dienen zur Formgebung und zur Formerhaltung. Beispiele dafür sind Hüte und Schuhe. Bei letzteren interessieren vor allem die Schuhoberteile, insbesondere in den Bereichen der Schuhspitzen und der Fersen. In diesem Industriezweig werden Versteifungsunterlagen häufig auch als "Kappenstoffe" oder "Schuhkappen" bezeichnet.

In der Literatur sind sehr viele Möglichkeiten zur Fabrikation und Einarbeitung entsprechender Schuhkappen beschrieben. Zur Anwendung gelangen häufig Faserunterlagen mit einem thermoplastischen Kunststoff als Bindemittel, wobei dieses Polymere letztendlich für die Formerhaltung maßgebend ist. Die zunächst flächigen Werkstoffe, das heißt die mit dem Bindemittel beschichteten oder getränkten Fasermaterialien, werden mit dem Ledermaterial verklebt und anschließend mittels Wärmebehandlung in ihre endgültige Form gebracht. Idealerweise erfolgt dieser Arbeitsgang in einem Schritt. Nach dem Stand der Technik werden deshalb Schuhkappen durch Wärmeeinwirkung mit dem Ledermaterial verklebt und gleichzeitig in ihre endgültige Form gebracht, die sie nach dem Abkühlen beibehalten sollen. Zum Zwecke der thermoaktivierten Verklebung werden deshalb die Schuhkappen vor deren Formgebung häufig mit Schmelzklebstoffen beaufschlagt, die beispielsweise mit Mikrowellen aktiviert werden können (DE-A-2224967 = US-A-4069602).

Oft wird auch auf den Einsatz von Schmelzklebern verzichtet, indem man einen thermoplastischen Kunststoff als Faserbindemittel verwendet, der durch gleichzeitige Anwendung von Wärme und Druck in der Lage ist, die Schuhkappen mit dem Leder zu verkleben: In der DE-A-4103389 (Derwent-Abstract AN 92-269897) ist ein Verfahren zur Herstellung von Polyamidhaltigen Schuhkappen beschrieben, bei dem eine heiße Polymerschmelze auf einen textilen Träger aufgebracht wird und dieser vor dem Erkalten mit dem Leder verklebt wird. In der EP-B-0102414 (US-A-4350732) werden ebenfalls Schuhkappen genannt, die ohne weitere Klebemittel, nur durch Thermo- oder Lösemittelaktivierung mit dem Schuhmaterial verklebt werden können. Nachteilig bei diesen Kappen ist deren aufwendiger und teurer mehrschichtiger Aufbau.

Weitere Herstellungsverfahren für Schuhkappen sind in der DE-C-3404701 (GB-A-2154859) und der DE-C-3447920 (GB-A 2154899) beansprucht. Dort werden pulverförmige Polymere auf die Faserstoffe aufgesintert und entsprechend weiterverarbeitet.

Wünschenswert sind jedoch einfache Verfahren, bei denen Vliese und ähnliche Fasermaterialien, beispielsweise Papier, Gewebe und Gewirke, mit Hilfe wäßriger Kunststoffdispersionen gebunden werden und auf diese Weise Versteifungsmaterialien für die Textil- und Lederindustrie zugänglich werden. Bei solchen Verfahren, wie sie beispielsweise aus der DE-A-1485579 (Derwent-Abstract AN 68-22047) zur Herstellung von Schuhkappen mittels wäßriger Polymerdispersionen bekannt sind, werden die Faserstoffe in die Polymerdispersion getaucht, getrocknet und die beschichteten Faserstoffe vor der Verklebung mit dem Substrat, beispielsweise Schuhoberleder, durch Eintauchen in Lösungsmittel angelöst. Zur Verbesserung der Klebbarkeit wird in der DE-A-1485579 gelehrt, die Kunststoffdispersion im Gemisch mit einem leicht anlösbarem Polymerpulver einzusetzen. Nachteilig ist, daß das in dieser Publikation genannte System zweikomponentig ist und vor Applikation extra angerührt werden muß.

Es bestand daher die Aufgabe ein Bindemittel für Versteifungsmaterialien auf der Basis von wäßrigen Kunststoffdispersionen zur Verfügung zu stellen, wobei die damit beschichteten oder getränkten textilen Trägermaterialien nicht nur nach Anlösen mit Lösungsmittel sondern auch nach Wärmebehandlung mit einem Substrat verklebbar sein sollten. Weiter sollten die Versteifungsmaterialien dem Endprodukt eine bleibende Form, harten Griff und eine gute Randnahtfestigkeit verleihen. Zur Schonung des Obermaterials sollte der Binder bei möglichst niederer Temperatur siegelbar (wärmeaktivierbar) sein; das heißt die Siegeltemperatur sollte bei 80 °C liegen. Gleichzeitig sollte das Bindemittel aber eine möglichst hohe Blocktemperatur aufweisen; das heißt bis etwa 40°C blockfest sein.

Überraschenderweise konnte dieses an sich widersprüchliche Anforderungsprofil - hohe Blocktemperatur bei gleichzeitig niederer Siegeltemperatur - durch die Verwendung eines in wäßriger Dispersion vorliegenden zweiphasigen Pfropfcopolymerisats erhalten werden.

Die EP-A 358007-betrifft ein Verfahren zur Herstellung von hitzebeständigen nonwovens, bei dem die nichtgewebten Fasermaterialien mit einem vernetzbaren Pfropfcopolymerisat beschichtet werden. Die Verwendung von Pfropfcopolymerisaten als Wärme- und Lösungsmittel-aktivierbare Bindemittel für Versteifungsmaterialien in der Textil- und Lederindustrie wird nicht beschrieben.

Die FR-A-2355038 betrifft Pfropfcopolymerisate mit einem vernetzten Kern mit extrem hohem Vernetzergehalt und einer vernetzten Hülle mit extrem hohem Vernetzergehalt. Die Pfropfcopolymerisate werden als Bindemittel und Beschichtungsmittel für Textilien beschrieben. Die Verwendung von Pfropfcopolymeren zur Herstellung von Versteifungsmaterialien, welche selbst bei relativ niederer Temperatur durch Wärmeaktivierung oder Lösungsmittelaktivierung siegelbar sind und auch ohne Vernetzung die erforderliche Blockfestigkeit zeigen, wird weder beschrieben noch nahegelegt.

Der Gegenstand der EP-A-0009258 entspricht weitgehend dem der FR-A-2355038: Latices von Pfropfcopolymerisaten mit hohem Vernetzergehalt im Kern und hohem Vernetzergehalt in der Hülle. Die Latices werden als Beschichtungsmittel für Textilien und Leder beschrieben. Aufgrund des hohen Vernetzergehalts sind diese Polymerisate ungeeignet für die Verwendung als siegelbare Bindemittel.

Der Abstract zur JP-A-54/137031 betrifft Pfropfcopolymerisate mit weichem Kern und harter Hülle zur Verwendung als Klebemittel für verschiedenste Materialien. Die Polymerisate weisen einen geringen Blockeffekt und gute Klebeigenschaften bei geringen Temperaturen auf. Die Tg's der zwei Polymerkomponenten unterschieden sich um mindestens 30°C. Die Verwendung von Pfropfcopolymerisaten als Wärme- und Lösungsmittel-aktivierbare Bindemittel für Versteifungsmaterialien in der Textil- und Lederindustrie wird weder beschrieben noch nahegelegt.

Gegenstand der Erfindung ist die Verwendung von wäßrigen Dispersionen zweiphasiger, siegelbarer Emulsions-Pfropfcopolymerisate mit einer Weichphase und einer Hartphase, wobei die Glasübergangstemperatur T_{g} der Hartphase über 50°C liegt, und die Glasübergangstemperaturen T_{g} der beiden Phasen sich um mindestens 30°C unterscheiden, dadurch gekennzeichnet, daß die wäßrigen Dispersionen der Pfropfcopolymerisate als Wärme- und Lösungsmittel-aktivierbare Bindemittel für Versteifungsmaterialien in der Textil- und Lederindustrie verwendet werden, wobei
a) die wäßrigen Dispersionen auf die zu versteifenden textilen Gebilde aufgetragen werden,
b) die textilen Gebilde danach getrocknet werden, und
c) das so gefertigte Versteifungsmaterial mit anderen Materialien wie Stoff oder Leder verformt und verklebt wird.

Die Phase mit niederer T_{g} enthält ein oder mehrere Homo- oder Copolymerisate erhältlich durch Emulsionspolymerisation von einem oder mehreren Monomeren aus der Gruppe der Acrylsäureester von Alkoholen mit 1 bis 10 C-Atomen, der Vinylester von gesättigten aliphatischen Carbonsäuren mit 2 bis 10 C-Atomen und der Olefine. Die Phase mit hoher T_{g} enthält ein oder mehrere Monomereinheiten aus der Gruppe der Methacrylsäureester von Alkoholen mit 1 bis 10 C-Atomen, der Vinylaromaten, der Fumarsäure- oder Maleinsäureester und der Vinylhalogenide.

Bevorzugt verwendet werden wäßrige Polymerdispersionen mit einem Festgehalt von 30 bis 65 Gew%, wobei das Pfropfcopolymerisat zusammengesetzt ist aus einem weichen Kern mit einer Glasübergangstemperatur T_{g} von -10 bis +50°C und einer harten Schale mit einer Glasübergangstemperatur Tg von ≥ 60°C und die Differenz der T_{g}-Werte mindestens 30°C beträgt. Für die Polymerisation des Kerns bevorzugte Monomere sind aus der Gruppe Acrylsäureester Methylacrylat, Ethylacrylat, Isopropylacrylat, n-Butylacrylat, t-Butylacrylat, 2-Ethylhexylacrylat; aus der Gruppe der Vinylester Vinylacetat, Vinylpropionat, Isopropenylacetat, Vinyllaurat, die Versaticsäure®-Vinylester VeoVa9® oder VeoVa10®; aus der Gruppe der Olefine Ethylen, Propylen und 1,3-Butadien. Bevorzugte Monomereinheiten für die harte Schale sind Methylmethacrylat, Styrol, Diisopropylfumarat und/oder Vinylchlorid.

Besonders bevorzugt sind wäßrige Polymerdispersionen mit einem Festgehalt von 45 bis 65 Gew%, wobei das Pfropfcopolymerisat eine Weichphase mit einer T_{g} von +10 bis +45°C und eine Hartphase mit einer T_{g} von ≥ 70°C enthält und die Differenz der T_{g}-Werte von Weichphase und Hartphase mindestens 30°C beträgt. Besonders bevorzugte Weichphasen enthalten Vinylacetathomopolymerisate, Copolymerisate von Vinylacetat, enthaltend VeoVa10^{R} und/oder Vinyllaurat, Vinylacetat/Ethylen-Copolymerisate mit einem Vinylacetat-Gehalt von 60 bis 90 Gew% sowie n-Butylacrylatpolymerisate. In der besonders bevorzugten Ausführungsform sind Styrol, Vinylchlorid und/oder Methylmethacrylat auf die Weichphase aufgepfropft.

Gegebenenfalls kann die Weichphase bzw. die Hartphase der genannten Emulsions-Pfropfcopolymerisate noch bis zu 10 Gew%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat -oder N-Methylolacrylamid, sulfonatfunktionelle Monomere wie Vinylsulfonat oder 2-Acrylamido-2-methyl-propansulfonat und mehrfach ungesättigte Monomere wie Divinyladipat.

Die genannten Kern-Schale-Emulsionscopolymerisate lassen sich prinzipiell in beliebigen Mengenverhältnissen herstellen, das heißt die Gewichtsanteile zwischen harter und weicher Phase können zwischen 1 : 99 bis 99 : 1 betragen. Bevorzugt werden Emulsionspfropfcopolymerisate mit einem Weich/Hart-Verhältnis von 95 : 5 bis 50 : 50.

Die wäßrigen Dispersionen der genannten zweiphasigen Emulsions-Pfropfcopolymerisate können allein oder als Mischung von zwei oder mehreren wäßrigen Dispersionen von zweiphasigen Emulsions-Pfropfcopolymerisaten unterschiedlicher Zusammensetzung als Bindemittel verwendet werden.

Die Herstellung der erfindungsgemäß zu verwendenden Dispersionen von zweiphasigen Pfropfcopolymerisaten erfolgt nach dem Verfahren der Emulsionspolymerisation im offenen Reaktionsgefäß oder unter Druck in zwei Stufen. In der ersten Stufe wird die Pfropfgrundlage, der weiche Kern, hergestellt. Dabei kann im Batch- und/oder im Zulaufverfahren gearbeitet werden. Nach dem Auspolymerisieren, der Restmonomergehalt sollte unter 1.0 % liegen, wird in einer zweiten Polymerisationsstufe die harte Hülle aufpolymerisiert. Auch bei dieser zweiten Stufe kann prinzipiell im Batch- und/oder Zulaufverfahren gearbeitet werden. Vorzugsweise wird nach dem Zulaufverfahren gearbeitet, wobei die Monomeren und/oder andere Bestandteile des Reaktionsgemisches zumindest teilweise dosiert werden. Insbesonders bei der zweiten Reaktionsstufe, dem Aufpfropfen der Polymerhülle, ist die Dosiervariante bevorzugt.

Beide Reaktionsstufen können wahlweise im Eintopf- oder im Zweitopfverfahren durchgeführt werden. Bei ersterem wird in einem Reaktionsgefäß zuerst der weiche Polymerkern erzeugt und im Anschluß daran werden die Monomeren zur Erzeugung der harten Hülle zudosiert und aufpolymerisiert. Im Zweitopfverfahren wird das Emulsionspolymerisat der ersten Stufe explizit isoliert und in einem zweiten Reaktionsgefäß als Saatlatex zum Aufpfropfen der harten Schale vorgelegt. Erfolgt die Polymerisation zur ersten Stufe unter Druck, beispielsweise bei der Herstellung von Ethylen/Vinylacetat-Copolymerisaten, so wird die Zweitopfvariante bevorzugt. Dazu wird das Polymerisat der ersten Stufe aus dem Druckautoklaven entnommen, in einem anderen Reaktionsgefäß vorgelegt und anschließend in der zweiten Reaktionsstufe die Pfropfmonomerphase aufgepfropft.

Die Emulsionspolymerisation zur ersten Stufe wird durch Radikalbildner in einem Temperaturbereich von 0 bis 90°C mittels wasserlöslicher Radikalbildner initiiert, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Azoverbindungen, wie Azobisisobutyronitril oder Azobiscyanovaleriansäure. Bei der thermischen Initiierung erfolgt die Polymerisation vorzugsweise zwischen 70 und 90°C. Die Radikalbildung kann bei niedrigeren Temperaturen, vorzugsweise von 30 bis 55°C, mit Hilfe von reduzierenden Agenzien wie Alkaliformaldehydsulfoxylaten, Alkalisulfiten, -bisulfiten und -thiosulfaten und Ascorbinsäure beschleunigt werden.

Als Dispergiermittel können alle üblicherweise bei der Emulsionspolymerisation verwendeten anionischen und nichtionischen Emulgatoren eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

In einer bevorzugten Verfahrensweise zur Herstellung eines Latex, der als besonders bevorzugt genannten Ethylen und Vinylacetat enthaltenden Copolymerisate, wird ein Ethylendruck von 1-9 MPa (10 bis 90 bar) abs. zu Beginn der Polymerisation eingestellt und durch Nachdrücken konstant gehalten.

Das Aufpfropfen der Hartphase erfolgt ebenfalls nach dem Emulsionspolymerisationsverfahren. Die Pfropfung erfolgt in Abhängigkeit vom gewählten Initiatorsystem vorzugsweise bei Temperaturen zwischen 30 und 90°C. Beispiele für Radikalstarter, die zur Initiierung der Pfropfreaktion geeignet sind, sind die bereits vorher genannten wasserlöslichen Radikalbildner und Redoxinitiatorsysteme, in den vorher genannten Mengen.

Gegebenenfalls können zur Pfropfung noch bis 5.0 Gew%, bezogen auf das Gesamtgewicht des Pfropfcopolymerisats, der genannten nichtionischen oder anionischen Emulgatoren zugegeben werden. In einer bevorzugten Ausführungsform wird nach Beendigung der Pfropfmonomerzugabe solange Reduktionsmittel nachdosiert, bis der Restmonomergehalt unter 1 Gew%, bezogen auf das Gesamtgewicht des Latex, beträgt. Bevorzugt ist auch die Pfropfung in Gegenwart eines mit Wasserstoffperoxid vorbehandelten Latex gemäß der in der DE-A-4240744 (entspricht EP-A-600 478, publiziert aus 08.06.94) beschriebenen Verfahrensweise. In der EP-A-600 478 wird lediglich ganz allgemein die Eignung dieser Latices als wäßriges Bindemittel in Textilbereich bzw. als Klebemittel in Putzen beansprucht.

Die genannten wäßrigen Dispersionen zweiphasiger Pfropfcopolymerisate werden erfindungsgemäß zur Versteifung von gewebten oder nicht gewebten, flächigen, textilen Gebilden wie Vliese, gewebe- oder gelegeverstärkte Vliesstoffe, Gewebe, Gewirre oder Gewirke aus üblichen natürlichen oder synthetischen Fasern wie Polyester, Polyamide, Wolle, Baumwolle, Cellulose, Viscose, Polypropylen verwendet. Bei der Anwendung werden sie in üblicher Weise durch Tauchen, Pflatschen oder Streichen auf das zu versteifende Material aufgetragen.

Zu den wäßrigen Dispersionen der zweiphasigen Emulsions-Pfropfcopolymerisate können gegebenenfalls noch die für diese Anwendung üblichen Zusatzstoffen wie Füllstoffe, Pigmente, Flammschutzmittel, Schaumbildehilfsmittel, Schauminhibitoren, Netzmittel in den gebräuchlichen Mengen zugegeben werden. Im allgemeinen werden die Dispersionen in einer Menge von 50 bis 500 g/m², bezogen auf trockenen Binder, auf die zu versteifenden textilen Gebilde aufgetragen. Gegebenenfalls nach Abtrennen von überschüssigem Bindemittel, beispielsweise durch Abquetschen, werden die gebundenen Gebilde im allgemeinen bei Temperaturen von 80°C bis 200°C getrocknet.

Mit dieser Vorgehensweise erhält man ein formstabiles, flexibles, nicht sprödes Versteifungsmaterial von hartem Griff, welches sich infolge von Wärmeeinwirkung verformen läßt und klebrige Eigenschaften entwickelt. Dieses Versteifungsmaterial läßt sich unter Einwirkung von Wärme und Druck, vorzugsweise bereits bei einer Temperatur von 60 bis 100°C mit anderen weichen, lappigen Materialien wie Stoff oder Leder verformen und verkleben. Dem Endprodukt, beispielsweise Schuhe oder Hüte, wird nach Verklebung mit dem Versteifungsmaterial die gewünschte Formstabilität verliehen.

Neben der bevorzugten wärmeaktivierten Verklebung des Versteifungsmaterials mit dem jeweiligen Substrat, können die mit den erfindungsgemäß zu verwendenden zweiphasigen Pfropfcopolymerisaten ausgerüsteten Versteifungsmaterialien auch nach Anlösen mit einem Lösungsmittel mit dem jeweiligen Substrat verklebt werden. Dazu werden die Versteifungsmaterialien für kurze Zeit, üblicherweise bis 10 Sekunden, in ein Lösungsmittelbad getaucht und nach einer offenen Zeit von 0.5 bis 5 Minuten unter Anwendung von Druck mit dem zu versteifenden Material, gegebenenfalls unter Verformung, verklebt. Geeignete Lösungsmittel sind organische Lösungsmittel wie das in den Beispielen verwendete Dichlormethan oder Formaldehyddimethylacetal.

Die erfindungsgemäß zu verwendenden Bindemittel ermöglichen die Herstellung von Versteifungsmaterialien, welche ohne die üblichen, dem Stand der Technik entsprechenden, reaktiven Schmelzkleber mit Ledermaterialien verklebbar sind. Sie sind daher besonders geeignet für die Herstellung von Versteifungsmaterialien, welche als Schuhkappen bei der Herstellung von Schuhen eingesetzt werden.

Besonders vorteilhaft wirkt sich bei der erfindungsgemäßen Verwendung der zweiphasige Aufbau des Bindemittels aus: Aufgrund des zweiphasigen Aufbaus ist der Binder sowohl mit Wärme als auch mit Lösungsmittel aktivierbar. Die Dispersion verfilmt bei niederer Temperatur und ist bei relativ niederer Temperatur siegelbar, ohne daß bei den damit beschichteten Versteifungsmaterialien bei Raumtemperatur ein Blockeffekt auftritt. Das dispergierte Polymer fungiert sowohl als Bindemittel für das Versteifungsmaterial als auch als Klebemittel zur Verklebung mit dem zu versteifenden Substrat.

Die nachfolgenden Beispiele dienen der weiteren Erläuterung der Erfindung:

### Beispiel 1:

### Herstellung einer wäßrigen Polyvinylacetat-Dispersion als Pfropfgrundlage (Weichphase):

### Zunächst wurden 4 Dosierlösungen vorbereitet:

1. Initiatorlösung I:
   0.32 Gew.Teile Kaliumpersulfat wurden in 18.0 Gew.Teilen Wasser gelöst.
2. Initiatorlösung II:
   0.136 Gew.Teile Na-Salz der Hydroxymethansulfinsäure (Brüggolit) wurden in 10 Gew.Teilen Wasser gelöst.
3. Monomer:
   95 Gew.Teile Vinylacetat wurden bereitgestellt.
4. Emulgatoren:
   0.35 Gew.Teile Vinylsulfonat, 1.7 Gew.Teile eines Polyglycolethers des Isotridecylalkohols mit 15 Ethylenoxid-Einheiten und 0.6 Gew.Teile eines Di-Natrium-(ethoxyalkyl)-sulfosuccinats wurden in 10 Gew.Teilen Wasser emulgiert. In einem Rührkessel mit Rückflußkühler und Innenthermometer wurden 0.4 Gew.Teile Na-Acetat, 0.001 Gew.Teile Eisen(II)-ammoniumsulfat, 0.5 Gew.Teile eines Polyglycolethers des Isotridecylalkohols mit 15 Ethylenoxid-Einheiten, 0.2 Gew.Teile eines Di-Natrium-(ethoxyalkyl)-sulfosuccinats, 0.08 Gew.Teile Kaliumpersulfat und 5.0 Gew.Teile Vinylacetat in 47.9 Gew.Teilen Wasser vorgelegt und unter Rühren auf 40°C erwärmt. Nach Erreichen des Temperaturgleichgewichts wurden beide Initiatorlösungen zeitgleich gestartet, wobei die Dosierraten entsprechend einer Dosierzeit von etwa 6 Stunden ausgelegt waren. Sofort nach dem Abklingen der ersten exothermen Reaktion (Saatlatexbildung) wurde die Monomer- und Emulgatordosierung innerhalb von 4 Stunden eingefahren. Nach Dosierende der Monomer- und Emulgatorlösung wurde die Polymerisation durch weitere Initiatorzugabe bei 40°C vervollständigt.

Es resultierte eine stippenfreie 51.8 %-ige Polymerdispersion mit einer durchschnittlichen Teilchengröße von 210 nm. Der K-Wert (gemessen in Tetrahydrofuran, Lösung: klar) des Polymerharzes lag bei 68.2, die Glastemperatur (DSC) betrug T_{g} = 37.6°C.

### Beispiel 2:

### Herstellung einer wäßrigen Ethylen-Vinylacetat-Dispersion als Pfropfgrundlage (Weichphase):

### Zunächst wurden 3 Dosierlösungen vorbereitet:

1. Initiatorlösung:
   0.7 Gew.Teile Kaliumpersulfat wurden in 20.1 Gew.Teilen Wasser gelöst.
2. Zulauf 1:
   87.5 Gew.Teile Vinylacetat wurden bereitgestellt.
3. Zulauf 2:
   2.40 Gew.Teile Di-Natrium-dihexylsulfosuccinat, 0.8 Gew.-Teile Acrylamido-2-methylpropansulfonsäure (Na-Salz), 0.75 Gew.Teile Acrylamid und 1.5 Gew.Teile Acrylsäure wurden in 32 Gew.Teilen Wasser gelöst.

In einem Druckautoklaven mit Innenthermometer wurden 0.25 Gew.Teile Vinylsulfonat, 0.46 Gew.Teile Di-Natrium-dihexylsulfosuccinat und 9.75 Gew.Teile Vinylacetat in 50.4 Gew.-Teilen Wasser vorgelegt und unter Rühren auf 75°C erwärmt. Nach Erreichen des Temperaturgleichgewichts wurden 30 bar Ethylen aufgedrückt und 20 % der vorbereiteten Initiatorlösung innerhalb von 10 Minuten zudosiert und die Dosierrate der verbliebenen Initiatorlösung entsprechend einer Dosierzeit von etwa 7 Stunden angeglichen. Sofort nach dem Abklingen der ersten exothermen Reaktion (Saatlatexbildung) wurde die Monomer- (Zulauf 1) und Emulgatordosierung (Zulauf 2) innerhalb von 6 Stunden eingefahren. Nach Dosierende der Monomer- und Emulgatorlösung wurde die Polymerisation durch weitere Initiatorzugabe bei 75°C vervollständigt.
Es resultierte eine stippenfreie 44.1 %-ige Polymerdispersion mit einer durchschnittlichen Teilchengröße von 280 nm und einem Ethylengehalt von ca. 15 %. Der K-Wert (gemessen in Tetrahydrofuran, Lösung: klar) des Polymerharzes lag bei 65.2, die Glastemperatur (DSC) betrug T_{g} = 14.9°C.

### Beispiel 3:

### Pfropfpolymerisation auf die Pfropfbasis aus Beispiel 1:

### Zunächst wurden 3 Dosierlösungen vorbereitet:

1. Initiatorlösung I:
   0.14 Gew.Teile Kaliumpersulfat wurden in 7.2 Gew.Teilen Wasser gelöst.
2. Initiatorlösung II:
   0.05 Gew.Teile Na-Salz der Hydroxymethansulfinsäure (Brüggolit) wurden in 2.5 Gew.Teilen Wasser gelöst.
3. Voremulsion:
   9.75 Gew.Teile Styrol, 0.25 Gew.Teile Acrylsäure und 0.2 Gew.Teile Di-Natrium-dihexylsulfosuccinat wurden in 5 Gew.-Teilen Wasser emulgiert.

In einem Rührkessel mit Rückflußkühler, Rührer und Innenthermometer wurden 173.7 Gew.Teile der 51.8 %-igen Polyvinylacetat-Dispersion aus Beispiel 1 vorgelegt und auf 40°C erwärmt. Nach Erreichen des Temperaturgleichgewichts wurden die drei vorbereiteten Dosierlösungen innerhalb von 2 Stunden zudosiert. Die Reaktion wurde durch einstündiges Rühren bei 40°C vervollständigt.
Es resultierte eine stippenfreie Dispersion mit einem Festgehalt von 50.1 Gew% und einer monomodalen Teilchengrößenverteilung, wobei die mittlere Teilchengröße ca. 210 nm betrug. Das teilchenförmige Pfropfpolymerisat war zweiphasig, die Glasübergangstemperaturen (DSC) lagen bei T_{g} = +37.2°C und bei T_{g} = +101.8°C, der K-Wert (gemessen in Tetrahydrofuran, Lösung: klar) betrug 66.3. Der Restmonomeranteil wurde zu 0.46 % und die MFT zu 22°C bestimmt.

### Beispiel 4:

### Pfropfpolymerisation auf die Pfropfbasis aus Beispiel 2:

In einem 3 1-Glaskolben mit Innenthermometer, Rückflußkühler und Rührer wurden 1070 g der Ethylen-Vinylacetat-Dispersion aus Beispiel 2, 61.6 g einer 35 %-igen H₂O₂-Lösung und 2.08 g Kaliumpersulfat vorgelegt und 2 Stunden bei Raumtemperatur gerührt. Anschließend wurde das Gemisch auf 65°C erwärmt. Nach Erreichen des Temperaturgleichgewichts wurden 1.65 g Natriumsalz der Hydroxymethansulfinsäure (Brüggolit), gelöst in 108 ml Wasser, sowie eine Voremulsion bestehend aus 180 g Styrol, 2.88 g Aerosol MA und 125 ml Wasser über einen Zeitraum von 3 Stunden zudosiert. Die Reaktion wurde durch einstündiges Rühren bei 65°C vervollständigt.
Es resultierte eine Dispersion mit einem Festgehalt von 45.3 Gew% und einer monomodalen Teilchengrößenverteilung, wobei die mittlere Teilchengröße 302 nm betrug. Das teilchenförmige Pfropfpolymerisat war zweiphasig, die Glasübergangstemperaturen (DSC) lagen bei T_{g} = +15.2°C und bei T_{g} = +102.3°C, der K-Wert (gemessen in Tetrahydrofuran, Lösung: klar) betrug 57.6. Der Restmonomeranteil wurde zu 0.50 % bestimmt.

### Beispiel 5:

### Herstellung einer Mischung von Dispersionen zweiphasiger Pfropfcopolymerisate:

Die Dispersionen aus Beispiel 3 und Beispiel 4 wurden in einem Gewichtsverhältnis von 2 : 1 miteinander vermischt.

### Anwendungstechnische Prüfung:

### Herstellung der Versteifungsmaterialien:

Die Dispersionen aus Beispiel 3, 4 und 5 wurden zur Versteifung von Polyester-Spinnvliesen mit einem Flächengewicht von 150 g/m² verwendet. Der Binderauftrag erfolgte mittels Vollbadimprägnierung und anschließendem Abquetschen im Foulard. Die Auftragsmenge betrug 350 bis 400 g/m² Binder trocken. Die Trocknung erfolgte über 5 Minuten bei 140°C in einem Matthis-Trockner.

### Prüfverfahren:

Die Härte (Steifheit) der ausgerüsteten Spinnvliese wurde bei Raumtemperatur qualitativ mit den Noten 1 (= hohe Härte) bis Note 6 (= weicher Griff) bewertet.

Die thermische Siegelbarkeit (Wärmeaktivierung) der ausgerüsteten Spinnvliese wurde bei einer Werkzeugtemperatur von T = 60°C, 70°C, 80°C und 100°C geprüft. Dazu wurden die mit Pfropfpolymerisat ausgerüsteten Spinnvliese jeweils gegen ein rohes, unbehandeltes Spinnvlies auf einer Fläche von 1 x 4 cm² bei der entsprechenden Temperatur und 5 Sekunden lang unter einem Druck von 1,47 MPa (15 kp/cm²) gegeneinander gesiegelt. Die Siegelnahtfestigkeit der Verbunde wurde qualitativ nach folgendem Schema bewertet:
- +++ =: sehr hohe Schälnahtfestigkeit,
- ++ =: hohe Schälnahtfestigkeit,
- + =: geringe Schälnahtfestigkeit,
- 0 =: keine Haftung.

Zur Prüfung der Lösemittel-Aktivierung wurden die mit Pfropfpolymerisat ausgerüsteten Spinnvliese in Dichlormethan (D) bzw. Formaldehyddimethylacetal (F) über eine Eintauchzeit von 0.5 Sekunden eingetaucht. Nach einer offenen Zeit von 1 Minute wurden die so vorbehandelten Spinnvliese mit rohem, unbehandeltem Spinnvlies auf einer Fläche von 1 x 4 cm² bei Raumtemperatur und 5 Sekunden lang unter einem Druck von 1,47 MPa (15 kp/cm²) verklebt.
Die Siegelnahtfestigkeit wurde mit demselben Bewertungsschema wie bei der Wärmeaktivierung qualitativ beurteilt.

Die Ergebnisse der anwendungstechnischen Prüfung sind in Tabelle 1 zusammengefaßt:

**Tabelle 1:**

| Beispiel | Siegeltemperaturen | | | | Härte | Lösemittel | |
|---|---|---|---|---|---|---|---|
| | 60°C | 70°C | 80°C | 100°C | (Note) | D | F |
| 3 | 0 | 0 | + | +++ | 1 | ++ | ++ |
| 4 | + | + | ++ | +++ | 4 | ++ | ++ |
| 5 | + | + | ++ | +++ | 1 | ++ | ++ |

## Patentansprüche

1. Verwendung von wäßrigen Dispersionen zweiphasiger, siegelbarer Emulsions-Pfropfcopolymerisate mit einer Weichphase und einer Hartphase, wobei die Glasübergangstemperatur T_{g} der Hartphase über 50°C liegt, und die Glasübergangstemperaturen T_{g} der beiden Phasen sich um mindestens 30°C unterscheiden, dadurch gekennzeichnet, daß die wäßrigen Dispersionen der Pfropfcopolymerisate als Wärme- und Lösungsmittel-aktivierbare Bindemittel für Versteifungsmaterialien in der Textil- und Lederindustrie verwendet werden, wobei
a) die wäßrigen Dispersionen auf die zu versteifenden textilen Gebilde aufgetragen werden,
b) die textilen Gebilde danach getrocknet werden, und
c) das so gefertigte Versteifungsmaterial mit anderen Materialien wie Stoff oder Leder verformt und verklebt wird.

2. Verwendung nach Anspruch 1, dadurch gekennzeichnet, daß als Bindemittel eine wäßrige Polymerdispersion mit einem Festgehalt von 30 bis 65 Gew% verwendet wird, wobei das Pfropfcopolymerisat zusammengesetzt ist aus einer Weichphase mit einer Glasübergangstemperatur T_{g} von -10 bis +50°C und einer Hartphase mit einer Glasübergangstemperatur T_{g} von ≥ 60°C und die Differenz der T_{g}-Werte mindestens 30°C beträgt, und die Weichphase Monomereinheiten enthält aus der Gruppe Methylacrylat, Ethylacrylat, Isopropylacrylat, n-Butylacrylat, t-Butylacrylat, 2-Ethylhexylacrylat, Vinylacetat, Vinylpropionat, Isopropenylacetat, Vinyllaurat, VeoVa9®, VeoVa10®, Ethylen, Propylen, 1,3-Butadien und die Hartphase Monomereinheiten enthält aus der Gruppe Methylmethacrylat, Styrol, Diisopropylfumarat, Vinylchlorid.

3. Verwendung nach Anspruch 1, dadurch gekennzeichnet, daß als Bindemittel eine wäßrige Polymerdispersion mit einem Festgehalt von 45 bis 65 Gew% verwendet wird, wobei das Pfropfcopolymerisat eine Weichphase mit einer T_{g} von +10 bis +45°C und eine Hartphase mit einer T_{g} von ≥ 70°C enthält und die Differenz der Tg-Werte von Weichphase und Hartphase mindestens 30°C beträgt und die Weichphase Vinylacetathomopolymerisat, Vinylacetat/Ethylen-Copolymerisat mit einem Vinylacetat-Gehalt von 60 bis 90 Gew% oder n-Butylacrylatpolymerisat enthält und als Hartphase Styrol, Vinylchlorid und/oder Methylmethacrylat auf die Weichphase aufgepfropft sind.

4. Verwendung nach Anspruch 1 bis 3, dadurch gekennzeichnet, daß das Gewichtsverhältnis von Weichphase zu Hartphase von 95 : 5 bis 50 : 50 beträgt.

5. Verwendung nach Anspruch 1 bis 4, dadurch gekennzeichnet, daß die wäßrigen Dispersionen der zweiphasigen Emulsions-Pfropfcopolymerisate allein oder als Mischung von zwei oder mehreren wäßrigen Dispersionen von zweiphasigen Emulsions-Pfropfcopolymerisaten unterschiedlicher Zusammensetzung als Bindemittel verwendet werden.

6. Verwendung nach Anspruch 1 bis 5, dadurch gekennzeichnet, daß das Bindemittel im Rahmen der Herstellung von Schuhen für die Herstellung von Versteifungsmaterialien, welche als Schuhkappen eingesetzt werden, verwendet wird.

## Claims

1. Use of an aqueous dispersion of a two-phase, sealable emulsion graft copolymer having a soft phase and a hard phase, the glass transition temperature T_{g} of the hard phase being above 50°C and the glass transition temperatures T_{g} of the two phases differing by at least 30°C, characterized in that the aqueous dispersion of the graft copolymers is used as a heat- and solvent-activatable binder for a stiffening material in the textile and leather industry,
a) the aqueous dispersion being applied to the textile structures to be stiffened,
b) the textile structures then being dried, and
c) the stiffening material thus produced being deformed and glued with other materials, such as fabric or leather.

2. Use according to Claim 1, characterized in that an aqueous polymer dispersion having a solids content of 30 to 65 % by weight is used as the binder, the graft copolymer being composed of a soft phase having a glass transition temperature T_{g} of -10 to +50°C and a hard phase having a glass transition temperature T_{g} of ≥ 60°C and the difference between the T_{g} values being at least 30°C, and the soft phase comprises monomer units from the group consisting of methyl acrylate, ethyl acrylate, isopropyl acrylate, n-butyl acrylate, t-butyl acrylate, 2-ethylhexyl acrylate, vinyl acetate, vinyl propionate, isopropenyl acetate, vinyl laurate, VeoVa9®, VeoVa10®, ethylene, propylene and 1,3-butadiene and the hard phase comprising monomer units from the group consisting of methyl methacrylate, styrene, diisopropyl fumarate and vinyl chloride.

3. Use according to Claim 1, characterized in that an aqueous polymer dispersion having a solids content of 45 to 65 % by weight is used as the binder, the graft copolymer having a soft phase having a T_{g} of +10 to +45°C and a hard phase having a T_{g} of ≥ 70°C and the difference between the T_{g} values of the soft phase and the hard phase being at least 30°C, and the soft phase comprises vinyl acetate homopolymer, vinyl acetate/ethylene copolymer having a vinyl acetate content of 60 to 90 % by weight or n-butyl acrylate polymer, and styrene, vinyl chloride and/or methyl methacrylate are grafted as the hard phase onto the soft phase.

4. Use according to Claims 1 to 3, characterized in that the weight ratio of soft phase to hard phase is 95:5 to 50:50.

5. Use according to Claims 1 to 4, characterized in that the aqueous dispersion of the two-phase emulsion graft copolymer is used as a binder by itself or as a mixture of two or more aqueous dispersions of two-phase emulsion graft copolymers of different composition.

6. Use according to Claims 1 to 5, characterized in that the binder, within the scope of shoe production, is used for the production of stiffening materials which are employed as shoe caps.

## Revendications

1. Utilisation de dispersions aqueuses de copolymérisats greffés d'émulsion scellables à deux phases, ayant une phase molle et une phase dure, la température de transition vitreuse T_{g} de la phase dure se situant au-dessus de 50°C, et les températures de transition vitreuse T_{g} des deux phases se différentiant d'au moins 30°C, caractérisée en ce que les dispersions aqueuses des copolymérisats greffés sont utilisées en tant que liants activables grâce à la chaleur et aux solvants pour des matériaux de renforcement dans l'industrie des textiles et du cuir,
a) les dispersions aqueuses étant appliquées sur les structures textiles à renforcer,
b) les structures textiles étant alors séchées et
c) le matériau de renforcement ainsi fabriqué étant mis en forme ou collé à l'aide d'autres matériaux comme de l'étoffe ou du cuir.

2. Utilisation selon la revendication 1, caractérisée en ce que l'on utilise, en tant que liant, une dispersion polymère aqueuse ayant une teneur en matières solides de 30 à 65 % en poids, le copolymérisat greffé étant composé d'une phase molle ayant une température de transition vitreuse T_{g} de -10 à +50°C et d'une phase dure ayant une température de transition vitreuse T_{g} de ≥ 60°C, et la différence des valeurs T_{g} étant d'au moins 30°C, et la phase molle contenant des unités de monomères du groupe acrylate de méthyle, acrylate d'éthyle, acrylate d'isopropyle, acrylate de n-butyle, acrylate de t-butyle, acrylate de 2-éthylhexyle, acétate de vinyle, propionate de vinyle, acétate d'isopropényle, laurate de vinyle, produit VeoVa9®, produit VeoVa10®, éthylène, propylène, 1,3-butadiène, et la phase dure contenant des unités de monomères du groupe méthacrylate de méthyle, styrène, fumarate de diisopropyle, chlorure de vinyle.

3. Utilisation selon la revendication 1, caractérisée en ce que l'on utilise en tant que liant une dispersion polymère aqueuse ayant une teneur en matières solides de 45 à 65 % en poids, le copolymérisat greffé contenant une phase molle ayant une température T_{g} de +10 à +45°C et une phase dure ayant une température T_{g} de ≥ 70°C et la différence des valeurs T_{g} de la phase molle et de la phase dure étant au moins de 30°C, et la phase molle contenant un homopolymérisat d'acétate de vinyle, un copolymérisat acétate de vinyle/éthylène, ayant une teneur en acétate de vinyle de 60 à 90 % en poids, ou un polymérisat d'acrylate de n-butyle, et en ce que l'on greffe, en tant que phase dure, sur la phase molle du styrène, du chlorure de vinyle et/ou du méthacrylate de méthyle.

4. Utilisation selon la revendication 1 à 3, caractérisée en ce que le rapport en poids de la phase molle à la phase dure est de 95 : 5 à 50 : 50.

5. Utilisation selon la revendication 1 à 4, caractérisée en ce que l'on utilise, en tant que liant, les dispersions aqueuses des copolymérisats greffés d'émulsion à deux phases, soit seuls, soit en mélange avec deux ou plusieurs dispersions aqueuses de copolymérisats greffés d'émulsion à deux phases de composition distincte.

6. Utilisation selon la revendication 1 à 5, caractérisée en ce que l'on utilise le liant dans le cadre de la fabrication de chaussures, pour la fabrication de matériaux de renforcement, qui sont utilisés en tant que bouts de soulier renforcés.
